Europäisches Patentamt

**European Patent Office**

Office européen des brevets

(19)

(11) Veröffentlichungsnummer: **0 135 727**
**B1**

(12) # EUROPÄISCHE PATENTSCHRIFT

(45) Veröffentlichungstag der Patentschrift:
01.04.87

(51) Int. Cl.⁴: **C 08 F 20/44**

(21) Anmeldenummer: **84109153.1**

(22) Anmeldetag: **02.08.84**

(54) **Polyacrylnitrile mit geringem K-Wert, Verfahren zu ihrer Herstellung und geeignete Verwendung.**

(30) Priorität: *05.08.83 DE 3328276*

(43) Veröffentlichungstag der Anmeldung:
**03.04.85 Patentblatt 85/14**

(45) Bekanntmachung des Hinweises auf die Patenterteilung:
**01.04.87 Patentblatt 87/14**

(84) Benannte Vertragsstaaten:
**AT BE CH DE FR GB IT LI NL**

(56) Entgegenhaltungen:
**FR - A - 1 061 952**
**FR - A - 2 225 449**
**US - A - 2 974 123**
**US - A - 3 255 158**

(73) Patentinhaber: **HOECHST AKTIENGESELLSCHAFT,**
**Postfach 80 03 20, D-6230 Frankfurt am Main 80 (DE)**

(72) Erfinder: **Krakkay, Tibor, Dr., Lenzfriederstrasse 14,**
**D-8000 München 19 (DE)**
Erfinder: **Poggi, Tatjana, Alte Schule Mitterfecking,**
**D-8424 Saal (DE)**
Erfinder: **Schubert, Ernst, Dr., Traubenweg 15,**
**D-8420 Kelheim/Donau (DE)**

ACTORUM AG

## Beschreibung

Die Erfindung betrifft ein Verfahren zur Herstellung von Homo- und Copolymerisaten des Acrylnitrils mit extrem niedrigen K-Werten von 34 bis 15 sowie die dabei erhaltenen Produkte und ihre Verwendung.

Homopolymerisate und Copolymerisate des Acrylnitrils mit hohem Molekulargewicht werden in der Industrie grosstechnisch hergestellt. Sie dienen vor allen als Rohstoff für die Herstellung von Fasern und Fäden. Der K-Wert dieser hochmolekularen Polymerisate liegt in der Regel bei 80 bis 90. Die Herstellung der Polymerisate erfolgt überwiegend nach dem Verfahren der Fällungspolymerisation in wässrigem Medium. Üblicherweise bevorzugt man das Verfahren der Redox-Polymerisation, wobei ein Radikalspender — eine anorganische Perverbindung — zusammen mit einem Reduktionsmittel eingesetzt werden.

Zum Begriff und zur Bestimmung des K-Wertes siehe Fikentscher, Cellulosechemie 13 (1932), 58.

Homopolymerisate und Copolymerisate des Acrylnitrils mit niederem Molekulargewicht sind bereits öfters beschrieben worden. Ein Vergleich der dabei erhaltenen Resultate ist jedoch mühsam, da die Berechnung der viskosimetrisch ermittelten Molekulargewichte $M_v$ aus der viskosimetrisch bestimmten Grenzviskositätszahl [η] nach den verschiedensten Gleichungen erfolgte. Manche Autoren haben statt der viskosimetrisch ermittelten Werte auf osmometrische Bestimmungen zurückgegriffen und Molekulargewichte $M_n$ als Zahlenmittel angegeben. Bekanntlich stimmen die Werte für die Molekulargewichte $M_v$ und $M_n$ nur in den seltensten Fällen überein, der Wert für $M_n$ kann beispielsweise nur die Hälfte von dem Wert $M_v$ ausmachen. Im vorliegenden Text wurde zur Charakterisierung der durchschnittlichen Molekülgrösse die Kennzahl «K-Wert» nach Fikentscher verwendet. Sie ist die in der Technik allgemein übliche Kennzahl für Acrylnitrilpolymerisate.

In Colloid and Polymer Science 256, 1027 (1978) wird bereits die Herstellung von Acrylnitril-Homopolymerisaten mit niedrigen Molekulargewichten $M_v$ von 21.690 bis 8.650 beschrieben. Die Polymerisation wird nach dem Lösungspolymerisations-Verfahren in Dimethylformamid unter Verwendung einer organischen Azoverbindung als Radikalspender durchgeführt. Das Endprodukt fällt bei diesem Verfahren in Lösung an und muss noch aufwendig isoliert werden. Derartige Polymerisate weisen keine Sulfonat- und/oder Sulfat-Endgruppen auf.

Ein weiteres Lösungspolymerisations-Verfahren zur Herstellung niedrig molekularer Polyacrylnitrile mit Molekulargewichten $M_v$ von ca. 30 000 bis 2 000 wird auch in der Us-A 2 763 636 beschrieben. Die Polymerisation erfolgt in konzentrierten Salzlösungen z.B. Zinkchlorid-Lösungen mit $H_2O_2$ bzw. $K_2S_2O_8$ als Katalysator. Es wird jedoch ohne Reduktionsmittel in Gegenwart von $Cu^{2+}$-Ionen gearbeitet.

Auch die in US-A 3 208 962 beschriebenen Homo- und Copolymerisate des Acrylnitrils sind nach Lösungspolymerisationsverfahren in konzentrierten Zinkchloridlösungen mittels $H_2O_2$ und Oxysäuren des Chlors hergestellt worden. Wie bei den oben beschriebenen Verfahren ist das Endprodukt nur aufwendig isolierbar, die Rückgewinnung der eingesetzten Salzlösungen mit erheblichen Schwierigkeiten verbunden.

In der DE-B 2 655 714 werden Verfahren zur Herstellung von Homopolymerisaten des Acrylnitrils mit sehr niedrigen K-Werten beschrieben, die auch nach einem Verfahrens der Fällungspolymerisation hergestellt werden. Als Reaktionsmedium wird jedoch eine Mischung aus Isopropanol und Wasser eingesetzt und die Polymerisation diskontinuierlich ausgeführt. Die Anwesenheit von Isopropanol in der Reaktionsmischung erschwert die Rückgewinnung des nicht umgesetzten monomeren Acrylnitrils, da statt Acrylnitril und Wasser ein Dreikomponentensystem jetzt destillativ getrennt werden muss. Bei dieser Vorliteratur wird $H_2O_2$ als Katalysator und Hydroxylamin- bzw. Hydrazinsalze als Aktivator beschrieben. Diese Reduktionsmittel führen infolge ihrer Giftigkeit zu Umweltschutzproblemen in den Abwässern. Ausserdem enthalten die obigen Polymere keine Sulfonat- und/oder Sulfat-Endgruppen im Kettenmolekül.

In der DE-C 2 318 609 wird die Herstellung von Homo- und Copolymerisaten des Acrylnitrils nach dem Verfahren der Fällungspolymerisation beschrieben. Als Reaktionsmedium dient Wasser, es wird mit einem Persulfat-Katalysator und einem Pyrosulfit-Aktivator gearbeitet. Das Verfahren führt jedoch nur zu Polymerisaten bis zu einem K-Wert von 35. Nachteilig ist auch, dass nur in verdünnten wässrigen Lösungen bei niedrigen Acrylnitril-Konzentrationen von 0,1 bis 1,5 Gew.-%, bezogen auf die Reaktionsmischung, gearbeitet wird, was zwangsläufig zu niedrigen Raum-Zeit-Ausbeuten führt. Die Polymerisation wird in Abwesenheit von Eisenionen durchgeführt, man gibt der Reaktionsmischung, Polyphosphate zu, die als Komplexbildner für Eisen und Schwermetallspuren dienen. Auch in der US-PS 3 488 336 werden niedermolekulare Acrylnitril-Homopolymerisate beschrieben, die durch eine diskontinuierliche Fällungspolymerisation in wässrigem Medium bei pH-Werten > 4 mittels Persulfat-Katalysatoren ohne Anwendung von Aktivatoren und Beschleunigern hergestellt wurden. Die sehr niedrigen Molekulargewichte werden nur dadurch erreicht, dass die Polymerisation des Acrylnitrils in sehr grosser Verdünnung bei Monomerkonzentrationen von 0,05 bis 0,5 Gew.-% und sehr langen Reaktionszeiten durchgeführt wird. Die Ausbeuten betragen maximal 23%, daraus errechnet sich eine Raum-Zeit-Ausbeute von nur 0,01 bis 0,2 g Polymerisat pro Liter Reaktionslösung und Stunde. Somit ist die angegebene Methode für ein technisches Verfahren ungeeignet. Die erhaltenen Polymerisate enthalten darüberhinaus praktisch keine Sulfonat-Endgruppen.

Sowohl in der DE-C 2 318 609 als auch in der US-A 3 488 336 wird betont, dass man niedrigmolekulare Polyacrylnitrile nur dann erhalten kann, wenn die Polymerisation des Acrylnitrils in sehr verdünnter wässriger Lösung durchgeführt wird.

Es bestand daher immer noch die Aufgabe, Acrylnitrilhomo- und -copolymerisate herzustellen, die sehr niedrige K-Werte und einen hohen Gehalt an stark sauren Endgruppen aufweisen und dazu ein Verfahren auszuarbeiten, das grosstechnisch durchgeführt werden kann, sich möglichst an das in der Industrie im grossen Rahmen betriebene Fällungspolymerisationsverfahren zur Herstellung von Polyacrylnitrilen als Faserrohstoff anlehnt, keine neuen bzw. weiteren Chemikalien benötigt als dies zur Herstellung der bekannten Polyacrylnitrilrohstoffe notwendig ist, die Notwendigkeit einer Trennung von Dreifachgemischen bei der Aufarbeitung der Reaktionslösungen vermeidet und die Herstellung von Acrylnitrilpolymerisaten mit sehr hohem Gehalt an Sulfonat und Sulfat-Endgruppen bereits ohne jeden Zusatz von entsprechend substituierten Comonomeren gestattet.

Es wurde nun überraschend gefunden, dass entgegen den Lehren des Standes der Technik es doch möglich ist, Acrylnitrilhomo- und -copolymerisate mit dem gewünschten sehr niedrigen K-Wert von 34 bis 15 und sehr hohem Anteil an Sulfonat- und Sulfat-Endgruppen herzustellen und zwar unter Einsatz sehr hoher Monomerkonzentration nach dem Verfahren der Fällungspolymerisation in wässriger Lösung mittels eines Redox-Systems. Bei dem gefundenen Verfahren kann mit hohen Raum-Zeit-Ausbeuten gearbeitet werden.

Gegenstand der Erfindung ist daher u.a. ein kontinuierliches oder halbkontinuierliches Verfahren zur Herstellung von Acrylnitrilhomo- oder -copolymerisaten mit mindestens 60 Gew.-% Acrylnitril-Einheiten und bis zu 40 Gew.-% mit Acrylnitril copolymerisierbaren Einheiten, die K-Werte nach Fikentscher von 34 bis 15 aufweisen. Diese K-Werte entsprechen mittleren Molekulargewichten $M_v$ (aufgrund von viskosimetrischen Messungen) von etwa 10 000 bis 2 700. Diese Werte wurden nach Marzolph und Scholtan, Makromolekulare Chemie 57, 52 (1962) berechnet. Diese Polymerisate werden nach dem Verfahren der Fällungspolymerisation unter Einsatz hoher Monomerkonzentrationen von 12 bis 30 Gew.-%, bevorzugt 12 bis 27% bezogen auf die in der gleichen Zeiteinheit zudosierten Gesamtmengen an Wasser und Monomeren in wässrigem Medium bei pH Werten von 1,5 bis 4,0 mittels eines Redox-Systems kontinuierlich oder halbkontinuierlich polymerisiert, wobei das Redox-System aus Persulfat-Katalysator in Konzentrationen von 0,5 bis 2,5 Gew.-% (gerechnet als $S_2O_8^{-2}$), aus Sulfit-Aktivator in Konzentrationen von 5 bis 25 Gew.-% (gerechnet als $S_2O_5^{-2}$) und Eisenionen als Beschleuniger in Konzentrationen von $6 \times 10^{-4}$ bis $2 \times 10^{-2}$ Gew.-%, bezogen jeweils auf die in der gleichen Zeiteinheit zudosierten Menge an Wasser, besteht, das Gewichtsverhältnis von Persulfat zu Pyrosulfit von 1:2 bis 1:30 variiert und die mittlere Verweildauer der Monomeren in der Reaktionsmischung während der Polymerisation 1 bis 4 Stunden, bevorzugt 1,5 bis 2,5 Stunden beträgt. Bevorzugt wird der Einsatz von Kaliumpersulfat als Katalysator, Natriumpyrosulfit als Aktivator und Mohr'schem Salz als Lieferant der Eisenionen. Die Polymerisationstemperatur beträgt üblicherweise 30 bis 65°C, bevorzugt zwischen 45 und 60°C. Als Comonomeres kann jede mit Acrylnitril copolymerisierbare Verbindung eingesetzt werden. Bevorzugte Comonomere sind Methylacrylat und Vinylacetat. Die Raum-Zeit-Ausbeute bei der Polymerisation nach dem erfindungsgemässen Verfahren beträgt 25 bis 105, vorzugsweise 50 bis 95 g/l · h und ist somit um ein Vielfaches grösser als die Raum-Zeit-Ausbeute von Verfahren gemäss dem Stande der Technik.

Die erfindungsgemässen Acrylnitrilhomo- und -copolymerisate mit den gewünschten niedrigen K-Werten von 34 bis 15 werden nur dann erhalten, wenn die folgenden 5 Parameter innerhalb der geforderten Grenzen eingehalten werden:
Konzentration an Persulfat-Katalysator
Konzentration an Sulfit-Aktivator
Konzentration an Eisenionen als Beschleuniger
Verhältnis Persulfat zu Pyrosulfit und
Verweilzeit der Monomeren in der Reaktionsmischung.

Werden die angegebenen Werte der Bereiche überschritten, so wird bei einem höheren Aufwand kein weiterer technischer Effekt erzielt. Werden die angegebenen unteren Grenzen der Bereiche dieser 5 Parameter unterschritten, so erhält man keine Polymerisate mehr mit den gewünschten K-Werten von unter 34.

Es ist selbstverständlich, dass die Parameter in ihren oben angegebenen Grenzen nicht willkürlich gewählt werden können. Sie sind von einander abhängig und müssen deshalb aufeinander abgestimmt werden, um die gewünschten Polymerisate mit K-Werten ≤ 34 zu erhalten. Hierzu sollen neben den Angaben in den Beispielen die folgenden Richtlinien dienen.

Bei Einsatz geringerer Katalysatormengen ist die Beschleuniger-Konzentration zu erhöhen und bei einer hohen Aktivatorkonzentration (erhöhtes Katalysator/Aktivator-Verhältnis) zu arbeiten.

Bei Anwendung eines geringen Katalysator/Aktivator-Verhältnisses müssen hohe Konzentrationen an Katalysator und Beschleuniger eingesetzt werden.

Eine geringe Menge an Eisenionen erfordert längere Verweilzeiten und hohe Einsatzmengen von Katalysator und Aktivator sowie ein hohes Katalysator/Aktivator-Verhältnis.

Bei einer kürzeren Verweilzeit muss mit hohen Mengen an Katalysator, Aktivator und Beschleuniger sowie einem hohen Katalysator/Aktivator-Verhältnis gearbeitet werden.

Eine Verringerung der Monomerkonzentration führt allgemein zu Polymerisaten mit niedrigerem K-Wert. Bei Verwendung von reinem Acrylnitril an Stelle einer Mischung aus Acrylnitril und Comonomer(en) fällt der K-Wert des daraus hergestellten Polymerisats ebenfalls.

Die Einhaltung des Bereiches der Monomerkonzentration von 12 bis 30 Gew.-%, bezogen auf die in der gleichen Zeiteinheit zudosierte Gesamtmenge an Wasser und Monomeren, gewährleistet eine rationelle technische Fertigung. Bei einem Überschreiten der Grenze ist eine vernünftige Handhabung der immer zäher werdenden Reaktionsmischung nicht mehr mit Sicherheit gewährleistet, bei einem Unterschreiten der Grenze von 12% vermindert sich die Raum-Zeit-Ausbeute so stark, dass eine technische Realisierung nicht mehr sinnvoll erscheint.

Die erfindungsgemäss hergestellten Polyacrylnitrile mit K-Werten von 34 bis 15 zeichnen sich durch einen sehr hohen Gesamtgehalt an Sulfonat- und Sulfat-Endgruppen von 250 bis 1000 Milliäquivalent/kg Polymerisat bei Gehalten an Sulfonatendgruppen von 180 bis 900 Milliäquivalent/kg Polymerisat aus. Dieser Bereich entspricht einem Gesamtgehalt an -$SO_3Na$ und -$OSO_3Na$ von ca. 2,5 bis über 10 Gew.-%. Hierbei ist darauf hinzuweisen, dass es sich bei diesen Angaben jeweils um Gehalte an Endgruppen handelt. Diese Werte werden also erreicht ohne den Zusatz von Comonomeren die bereits entsprechende Gruppen im Molekül enthalten.

Die bei den erfindungsgemäss durchgeführten Polymerisationen erhaltenen Suspensionen können durch Filtration oder Zentrifugieren getrennt werden und fallen damit als wassehaltige Kuchen an. Es wurde beobachtet, dass die Polymerteilchengrösse mit fallendem K-Wert stark abnimmt. Trennungs- und Waschprobleme treten jedoch nicht auf, sofern statt Filterapparaten Zentrifugen eingesetzt werden. Im Gegensatz zu Polyacrylnitril mit hohem K-Wert sind die erfindungsgemässen Produkte nicht nur in den aprotischen Lösungsmitteln wie z.B. Dimethylformamid löslich, sondern auch in Mischungen von z.B. Acetonitril mit Wasser. 10%ige Polymerlösungen in Dimethylformamid gelieren erst nach Zusatz von ca. 25% Wasser. Diese erstaunliche Abweichung gegenüber den bekannten Acrylnitrilpolymeren wird bedingt durch den hohen Gehalt an Sulfonat- und Sulfat-Endgruppen.

Aufgrund dieser Eigenschaften sind die erfindungsgemässen Produkte geeignet als Komponenten von Anstrichsystemen und Überzügen. Die Polymerisate sind bereits in der Form des wasserhaltigen Filterkuchens leicht zu geformten Körpern extrudierbar.

Unterwirft man die erfindungsgemässen Polymerisate beispielsweise einer alkalischen Hydrolyse, so erhält man in Abhängigkeit von Alkali/Polymerisat-Verhältnis sowie von der Verseifungszeit Polyacrylate, die im Molekül jedoch noch Reststickstoff in Form von schwer hydrolysierbaren Heterocyclen enthalten.

Diese Hydrolyseprodukte eignen sich als Emulgatoren, Dispergatoren und Hilfsmittel insbesondere als Ablagerungsverhinderer (scale inhibitors) bei Tiefbohrungen und bei der Erdölförderung. Insbesondere bei den mit Erdöl anfallenden Wassermengen werden häufig sehr stark salzhaltige Wässer beobachtet, die grosse Mengen an zunächst noch gelösten Calcium- und Magnesiumverbindungen enthalten. Dieser hohe Gehalt an Calciumverbindungen führt jedoch leicht zu einem Verlegen bzw. Verstopfen der Förderrohrleitungen.

Die National Association of Corrosion Engineers (NACE) hat Testmethoden standardisiert, die eine Prüfung von Verbindungen gestatten, die in der Lage sein sollen, eine Abscheidung bzw. ein Ausfällen von Calciumcarbonat bzw. Calciumsulfat aus entsprechenden Lösungen oder Solen zu verhindern. In den nachfolgenden Beispielen wurde der NACE-Standard TM 03-74 als Testmethode angewandt. Dabei ergab sich, dass bereits ausserordentlich geringe Mengen von z.B. 0,5 bis 1 ppm einer ca.

15%igen wässrigen Lösung eines Hydrolyseprodukts der erfindungsgemässen Polymerisate genügen, um eine Calciumsulfat-Abscheidung unter den gewählten Bedingungen vollständig zu verhindern. Schwieriger gestaltet sich die Verhinderung von Ablagerung von Calciumcarbonat. Hier sind nach den durchgeführten Untersuchungen etwa 5 ppm der 15%igen Hydrolysatlösung erforderlich, um wenigstens 60% des sonst ausfallenden Calciumcarbonats in Lösung zu halten.

Natürlich ist es möglich, die erfindungsgemässen Produkte auch einer sauren Hydrolyse zu unterwerfen. Unter diesen Umständen wird jedoch meist ein höherere Reststickstoffgehalt beobachtet als bei der alkalischen Verseifung, was vermutlich auf eine höhere Beständigkeit der bei der Hydrolyse entstandenen Acrylamidgruppen zurückzuführen ist. Werden beispielsweise Copolymerisate des Acrylnitrils mit Vinylacetat einer sauren Verseifung unterworfen, so kann es zur Ausbildung von Fünfringlactonen oder aber kettenvernetzenden Reaktionen über Lactonbrücken kommen.

Zur weiteren Verdeutlichung der Erfindung sollen die nachfolgenden Beispiele dienen. Sofern nicht anders angegeben, beziehen sich Teil- und Prozentangaben auf Gewichtseinheiten. Es wurden folgende Mess- bzw. Bestimmungsmethoden angewandt:

Die K-Werte der obigen Polymerisate wurden nach Bestimmung der $\eta$rel-Werte an Lösungen von 0,5 g Polymerisat in 100 ml Dimethylformamid bei 20°C mit Hilfe von Ubbelohde-Viskosimetern mit hängendem Kugelniveau, nach den Formeln von Fikentscher, Cellulosechemie 13, (1932), 58ff berechnet. Die Ermittlung der Molekulargewichte $M_v$ erfolgte nach den Formeln von Marzolph und Scholtan in «Makromolekulare Chemie 57, 52ff (1962)». Die Bestimmung der Grenzviskositätszahl [$\eta$] erfolgte ebenfalls mit Hilfe von Ubbelohde-Viskosimetern an unterschiedlich konzentrierten Lösungen in Dimethylformamid bei 20°C.

Die Bestimmung der Gesamtmenge an stark sauren Gruppen (Sulfonat- und Sulfat-Gruppen) erfolgte mit Hilfe verschiedener Ionenaustauschersäulen. Dazu werden beispielsweise 5 g des zu untersuchenden Polymerisats in 500 ml Dimethylformamid gelöst und über eine erste Ionenaustauschersäule mit 100 ml eines stark sauren Austauscherharzes (®Levatit S 100 der Firma Bayer AG) gegeben. Das erhaltene Eluat wird dann über einen zweiten Ionenaustauscher mit 100 ml Mischbettharz aus stark sauren und stark basischen Ionenaustauscherharzen (Levatit S 100/®Duolite A 101D der Firma Diamond Shamrock) und anschliessend nochmals über 100 ml eines stark sauren Ionenaustauschers gegeben. Durch die Verwendung des Mischbettaustauschers werden sämtliche nicht an dem Polymerisat gebundenen Salze aus der zu untersuchenden Lösung entfernt.

Der Gesamtgehalt an stark sauren Sulfonat- und Sulfat-Endgruppen ergibt sich dann durch potentiometrische nicht wässrige Titration einer vorgegebenen Menge an Eluat, das nach Passage durch die dritte Ionenaustauschersäule erhalten wird. Parallel dazu wird eine Trockengehaltsbestimmung von ca. 20 g Eluat durchgeführt, wobei die entsprechende Probe in einem Vakuumtrockenschrank bei Temperaturen zwischen 100 und 120°C getrocknet wird.

Zur Bestimmung der an das Polymerisat direkt gebundenen Sulfonatgruppen wird das zu untersuchende Polymerisat zunächst einer sauren wässrigen Hydrolyse unterworfen. Dazu werden beispielsweise 15 g des Polymerisatpulvers mit 100 ml einer 0,2%igen wässrigen Oxalsäurelösung versetzt und 4 Stunden unter Rückfluss gekocht. Die Reaktionslösung wird anschliessend filtriert, der Rückstand sorgfältig mit heissem destillierten Wasser säurefrei gewaschen, mit Alkohol nachbehandelt und bei 60°C getrocknet. Von dieser hydrolysierten gewaschenen und getrockneten Probe, die jetzt nur noch Sulfonatgruppen enthält, da die Sulfatestergruppen abgespalten worden sind, wird wie vorher beschrieben, eine ca. 1%ige Lösung in Dimethylformamid hergestellt und der Gehalt nach Passieren durch das Ionenaustauschersäulen-System und anschliessende potentiometrische Titration sowie getrennte Trockenwertbestimmung, analysiert.

Der Gehalt an Sulfatgruppen ergibt sich als Differenz aus dem Gesamtgehalt aus Sulfonat und Sulfatgruppen abzüglich dem getrennt bestimmten Gehalt an Sulfonatgruppen. Bei den durchgeführten Polymerisationen wurde stets destilliertes oder vollentsalztes Wasser eingesetzt.

*Beispiel 1*

In einem 5 l-Vierhalsglaskolben, der mit Doppelflügelrührer und Auslauf versehen war, wurden nach Verdrängung der Luft durch $CO_2$, 2622 ml destilliertes Wasser, 264 mg $(NH_4)_2Fe(SO_4)_2 \cdot 6 H_2O$, 8,2 ml einer 10%igen $H_2SO_4$, 12,2 g $K_2S_2O_8$ gelöst in 600 ml dest. $H_2O$ und 146,4 g $Na_2S_2O_5$ gelöst in 970 ml dest. $H_2O$ vorgelegt. Die Mischung wurde auf 55°C aufgeheizt und mit Hilfe eines Thermostaten bei dieser Temperatur gehalten. Nach Erreichern der vorgegebenen Temperatur wurde mit der kontinuierlichen Dosierung der folgenden vier Dosierflüssigkeiten begonnen. Pro Stunde wurden dosiert

1. 611 ml Monomermischung, bestehend aus 585 ml Acrylnitril und 26 ml Acrylsäuremethylester
2. 1166 ml dest. $H_2O$, darin enthalten 93,4 mg $(NH_4)_2Fe(SO_4)_2 \cdot 6 H_2O$ und 2,8 ml einer 10%-igen $H_2SO_4$,
3. 8,6 g $K_2S_2O_8$ gelöst in 160 ml dest. $H_2O$ und
4. 103,2 g $Na_2S_2O_5$ gelöst in 160 ml dest. $H_2O$.

Aus dem Reaktionskolben wurden kontinuierlich 2100 ml Polymersuspension pro Stunde mit Hilfe einer Schlauchpumpe entnommen, wodurch das Reaktionsvolumen und die mittlere Verweilzeit der Reaktanten während der Polymerisation konstant gehalten wurden.

Die Polymerisation sprang nach ca. 15 Minuten an, was durch eine Trübung der Lösung beobachtet werden konnte, das Polymerisationsgleichgewicht wurde innerhalb von 8 Stunden erreicht, wonach der K-Wert, die Polymerausbeute, die Teilchenform und die Polymereigenschaften konstant blieben. Der pH-Wert der Reaktionslösung wurde zu 2,87 gemessen. Die entnommene Polymersuspension wurde in einem zweiten Kolben mit Hilfe einer 5%igen NaOH-Lösung neutralisiert, damit auch die Polymerisation abgestoppt, das Polymerisat durch Filtration bzw. Zentrifugieren isoliert mit Wasser gewaschen und bei 40°C im Vakuumtrockenschrank getrocknet.

Der K-Wert des erhaltenen Copolymerisats betrug 34, das Molgewicht $M_v$ ca. 9000. Die Polymerausbeute betrug 80%, die Raum-Zeit-Ausbeute 95 g Polymerisat/l h. Das Polymer enthielt 1,04% Schwefel, 260 mÄq/kg stark saure Sulfonat- und Sulfatgruppen davon 190 mÄq/kg Sulfonatgruppen.

Ein Abstoppen der Polymerisationsreaktion ist natürlich auch durch Zusatz anderer bekannter Verbindungen wie z.B. Hydrochinon möglich, insbesondere wenn auf eine Neutralisation der Reaktionslösung verzichtet werden soll.

*Beispiel 2*

Es wurde wie unter Beispiel 1 gearbeitet, jedoch in der Vorlage 292,8 g $Na_2S_2O_5$ gelöst in 970 ml dest. Wasser eingesetzt. Die anderen Komponenten blieben unverändert.

Die stündlichen Dosierungen betrugen:

1. 611 ml Monomergemisch wie im Beispiel 1,
2. 1006 ml dest. $H_2O$, enthaltend 93,4 mq $(NH_4)_2Fe(SO_4)_2 \cdot 6 H_2O$ und 2,8 ml 10%ige $H_2SO_4$
3. 8,6 g $K_2S_2O_8$ gelöst in 160 ml dest. $H_2O$
4. 206,4 g $Na_2S_2O_5$ gelöst in 320 ml dest. $H_2O$

Der pH-Wert der Reaktionsmischung im Gleichgewicht betrug 2,74.

Es wurde ein Copolymerisat mit dem K-Wert 31, einem Molgewicht $M_v$ von ca. 7300 in einer Ausbeute von 66% und einer Raum-Zeit-Ausbeute von 78 g Polymer/l h erhalten. Der Schwefelgehalt betrug 1,42%, der Gehalt an Sulfonat- und Sulfat-Endgruppen 367 mÄq/kg, der Sulfonat-Endgruppengehalt allein 265 mÄq/kg.

*Beispiel 3*

Es wurde wie im Beispiel 1 gearbeitet, jedoch mit veränderten Vorlagemengen und Dosierflüssigkeiten. Die Vorlage bestand aus 2622 ml dest. $H_2O$, 264 mg $(NH_4)_2Fe(SO_4)_2 \cdot 6 H_2O$, 8,2 ml einer 10%igen $H_2SO_4$, 15,2 g $K_2S_2O_8$ gelöst in 600 ml $H_2O$ und 364,8 g $Na_2S_2O_5$ gelöst in 970 ml $H_2O$.

Es wurden stündlich dosiert:

1. 611 ml Monomergemisch wie in Beispiel 1
2. 526 ml $H_2O$ mit 93,4 mg $(NH_4)_2Fe(SO_4)_2 \cdot 6 H_2O$ und 2,8 ml 10%iger $H_2SO_4$
3. 10,8 g $K_2S_2O_8$ gelöst in 320 ml $H_2O$
4. 259,2 g $Na_2S_2O_5$ gelöst in 640 ml $H_2O$

Im stationären Zustand wurde ein pH-Wert der Reaktionslösung von 2,73 gemessen. Das erhaltene Copolymerisat wies einen K-Wert von 28 und ein Molgewicht $M_v$ von ca. 6300 auf, die Polymerausbeute betrug 54%, die Raum-Zeit-Ausbeute 64 g Polymerisat/l h. Das Polymer enthielt 1,64% Schwefel, Gesamtgehalt an stark sauren Gruppen 424 mÄq/kg davon 292 mÄq/kg Sulfonatgruppen.

*Beispiel 4*

Das Beispiel 3 wurde wiederholt, wobei jedoch als Monomer nur Acrylnitril eingesetzt wurde. Die Vorlage entsprach dem Beispiel 3, die Zusammensetzung der Dosierflüssigkeiten und die Dosiermengen änderten sich nur geringfügig:

1. 614,4 ml Acrylnitril
2. 522,7 ml $H_2O$ mit 93,2 mg $(NH_4)_2Fe(SO_4)_2 \cdot 6\ H_2O$ und 2,9 ml 10%ige $H_2SO_4$
3. 10,8 g $K_2S_2O_8$ gelöst in 320 ml Wasser
4. 259,2 g $Na_2S_2O_5$ gelöst in 640 ml Wasser.

Im stationären Zustand wurde ein pH-Wert von 2,78 in der Reaktionsmischung gemessen. Das erhaltene Homopolymerisat wies einen k-Wert von 23 auf, das Molgewicht $M_v$ betrug ca. 5000. Es wurde eine Polymerausbeute von 58% und eine Raum-Zeit-Ausbeute von 68 g/l h gefunden. Der Schwefelgehalt im Polyacrylnitril betrug 2,19%, der Gesamtgehalt an Sulfonat- und Sulfatgruppen 563 mÄq/kg, davon waren 451 mÄq/kg Sulfonatgruppen.

*Beispiel 5*

Die Vorlage wurde wie unter Beispiel 3 angegeben eingesetzt, dosiert wurden die folgenden Flüssigkeitsmengen:

1. 520,8 ml Acrylnitril
2. 619,2 ml Wasser mit 99,0 mg $(NH_4)_2Fe(SO_4)_2 \cdot 6\ H_2O$ und 3,1 ml 10%iger $H_2SO_4$
3. 10,8 g $K_2S_2O_8$ gelöst in 320 ml Wasser
4. 259,2 g $Na_2S_2O_5$ gelöst in 640 ml Wasser.

Der pH-Wert der Reaktionslösung im stationären Zustand betrug 2,75. Es wurde ein Homopolymerisat mit einem K-Wert von 19,5, mit einem Molgewicht $M_v$ von ca. 4000 erhalten. Die Polymerausbeute betrug 50%, die Raum-Zeit-Ausbeute 50 g Polymer/l h. Der Schwefelgehalt des Polymerisats wurde zu 2,61% bestimmt.

*Beispiel 6*

Beispiel 5 wurde wiederholt mit vermindertem Monomereinsatz. Die Vorlage blieb unverändert, dosiert wurden pro Stunde:

1. 449,5 ml Acrylnitril
2. 687,4 ml Wasser mit 103,5 mg $(NH_4)_2Fe(SO_4)_2 \cdot 6\ H_2O$ und 3,1 ml 10%ige $H_2SO_4$
3. 10,8 g $K_2S_2O_8$ gelöst in 320 ml Wasser
4. 259,2 g $Na_2S_2O_5$ gelöst in 640 ml Wasser.

Der pH-Wert der Reaktionsmischung betrug im stationären Zustand 2,75. Das erhaltene Homopolymerisat wies einen K-Wert von 18 und ein Molekulargewicht $M_v$ von ca. 3500 auf. Die Polymerausbeute betrug ca. 56%, die Raum-Zeit-Ausbeute 48 g%l h, der Schwefelgehalt 2,90%.

*Beispiel 7*

Die gewählte Vorlage entsprach der des Beispiels 3, dosiert wurden:

1. 303,9 ml Acrylnitril
2. 832,6 ml Wasser mit 112,6 mg $(NH_4)_2Fe(SO_4)_2 \cdot 6\ H_2O$ und 3,5 ml einer 10%igen $H_2SO_4$
3. 10,8 g $K_2S_2O_8$ gelöst in 320 ml Wasser
4. 259,2 g $Na_2S_2O_5$ gelöst in 640 ml Wasser.

Der pH-Wert im stationären Zustand betrug 2,63. Das erhaltene Homopolymerisat wies einen K-Wert von 15,5 und ein Molgewicht $M_v$ von ca. 2700 auf.

Der Schwefelgehalt betrug 4,56%, die Gesamtmenge an stark sauren Gruppen 986 mÄq/kg davon 871 mÄq Sulfonatgruppen/kg. Die Polymerausbeute betrug etwa 42%, die Raum-Zeit-Ausbeute 24,5 g/l h.

*Beispiel 8*

Es wurde wie bei den vorhergehenden Beispielen mit der Vorrichtung gemäss Beispiel 1 gearbeitet. Als Vorlage dienten 2022 ml Wasser mit 2640 mg $(NH_4)_2FE(SO_4)_2 \cdot 6\ H_2O$, 8,2 ml einer 10%igen $H_2SO_4$, 18,3 g $K_2S_2O_8$ gelöst in 600 ml Wasser und 549,0 g $Na_2S_2O_5$ gelöst in 1570 ml Wasser. Pro Stunde wurden die folgenden Mengen zudosiert:

1. 303,9 ml Acrylnitril
2. 672,6 ml Wasser mit 1126 mg $(NH_4)_2Fe(SO_4)_2 \cdot 6\ H_2O$ und 3,5 ml einer 10%igen $H_2SO_4$
3. 12,9 g $K_2S_2O_8$ gelöst in 320 ml Wasser
4. 387,0 g $Na_2S_2O_5$ gelöst in 800 ml Wasser.

Der pH-Wert der Reaktionslösung im stationären Zustand betrug 2,72, das erhaltene Homopolymerisat wies einen K-Wert von 16, ein Molgewicht von ca. 3000 und einen Schwefelgehalt von 5,8% auf.

*Beispiel 9*

Es wurde wiederum die Vorrichtung gemäss Beispiel 1 benutzt. Als Vorlage dienten 2022 ml Wasser mit 2640 mg $(NH_4)_2Fe(SO_4)_2 \cdot 6\ H_2O$, 8,2 ml einer 10%igen $H_2SO_4$, 45,8 g $K_2S_2O_8$ gelöst in 1200 ml Wasser und 126 g $Na_2S_2O_5$ gelöst in 970 Wasser. Pro Stunde wurden dosiert:

1. 303,9 ml Acrylnitril
2. 472,4 ml dest. Wasser mit 1126 mg $(NH_4)_2Fe(SO_4)_2 \cdot 6\ H_2O$ und 3,5 ml einer 10%igen $H_2SO_4$
3. 39,2 g $K_2S_2O_8$ gelöst in 1000 ml Wasser
4. 107,8 g $Na_2S_2O_5$ gelöst in 320 ml Wasser.

Die Reaktionsmischung zeigte im stationären Zustand einen pH-Wert von 1,75, das erhaltene Polymerisat einen K-Wert von 19, ein Molgewicht $M_v$ von ca. 3700 und einen Schwefelgehalt von 2,86%.

In den nachfolgenden Beispielen 10 bis 13 wird der Einfluss von Veränderungen bei den einzelnen Parametern deutlich gemacht.

*Beispiel 10*

Das Beispiel 1 wurde wiederholt, wobei jedoch nur noch eine Menge von 34,4 g $Na_2S_2O_5$ pro Stunde zudosiert wurde. Durch diese Veränderung wurde das Gewichtsverhältnis Katalysator zu Aktivator von 1:12 auf 1:4 verringert. Auch bei der Vorlage wurde nur noch ein Drittel der $Na_2S_2O_5$-Menge (48,7 g) eingesetzt. Unter diesen Bedingungen stellte sich ein stationärer Zustand ein, bei dem die Reaktionsmischung einen pH-Wert von 2,53 zeigte. Das erhaltene Polymerisat wies jedoch nicht mehr einen K-Wert von 34, sondern von 44 auf.

*Beispiel 11*

Der Ansatz des Beispiels 3 wurde wiederholt, wobei jedoch durch Verdoppelung der pro Stunde abgezogenen Reaktionsmischung von 2100 ml auf 4200 ml und eine entsprechende Steigerung der zudosierten Mengen auf das Doppelte die Verweilzeit des Beispiels 3 von 2 Stunden bei diesem Beispiel 11 auf 1 Stunde reduziert wurde. Im einzelnen wurden pro Stunde die folgenden Mengen dosiert:

1.  1222 ml Monomergemisch
2.  1052 ml Wasser mit 186,8 mg $(NH_4)_2(SO_4)_2 \cdot 6\ H_2O$ und 5,6 ml 10%iger $H_2SO_4$
3.  21,6 g $K_2S_2O_8$ gelöst in 640 ml Wasser
4.  518,4 g $Na_2S_2O_5$ gelöst in 1280 ml Wasser.

Im stationären Zustand zeigte die Reaktionsmischung einen pH-Wert von 2,75. Unter diesen Umständen wurde ein Copolymerisat erzeugt, das nicht mehr einen K-Wert von 28, sondern einen von 31 aufwies.

*Beispiel 12*

Das Beispiel 11 wurde wiederholt, wobei jedoch die Menge an zudosiertem Mohr'schen Salz von 186,8 mg auf 18,7 mg pro Stunde reduziert wurde. Entsprechend wurde in der Vorlage die Menge dieser Substanz auf 26,4 mg verringert. Unter diesen Bedingungen wurde ein Copolymerisat erhalten, das einen K-Wert von 45 zeigte, also ausserhalb des beanspruchten Bereiches lag.

*Beispiel 13*

Es wurde das Beispiel 4 wiederholt, wobei jedoch die Menge an Katalysator und Aktivator vermindert wurde, das Verhältnis von Katalysator zu Aktivator jedoch unverändert 1:24 blieb. Beim Beispiel 13 wurden stündlich nur 8,6 g $K_2S_2O_8$ und 206,4 g $Na_2S_2O_5$ zugegeben. Auch der Gehalt an Katalysator und Aktivator in der Vorlage wurde entsprechend reduziert auf 12,2 g $K_2S_2O_8$ und 293,3 g $Na_2S_2O_5$. Der pH-Wert der Lösung im stationären Zustand wurde zu 2,86 gemessen. Das erhaltene Polymerisat wies jedoch einen K-Wert von 27 und nicht mehr 23, wie im Beispiel 4, auf.

*Beispiel 14*

In einem 4 l-Dreihalskolben mit Rührer und Rückflusskühler wurden in 2490 ml Wasser 192 g NaOH-Plätzchen aufgelöst. Die 7,16%ige Natronlauge wurde zum Sieden erhitzt und anschliessend innerhalb von 15 Minuten in drei Portionen insgesamt 318 g des Copolymerisates aus Acrylnitril-Acrylsäuremethylester mit dem K-Wert 34 zugegeben, das gemäss Beispiel 1 erhalten wurde. Zu Beginn der heftigen Reaktion, die unter Ammoniakentwicklung abläuft, verfärbt sich die Suspension tiefrot. Bei weiterem Erhitzen entsteht dann eine homogene gelbe Lösung. Die Verseifung wurde nach 6 Stunden beendet. Die Hydrolysatlösung zeigte folgende Eigenschaften:

| | |
|---|---|
| Feststoffgehalt | 19,2% |
| Reststickstoff | 0,9% |
| acidimetrisch bestimmbare Carboxyl- gruppen | 5,5% |

Die Hydrolyse wurde wiederholt, nur wurde das Molverhältnis von Nitrilgruppen zu NaOH von 1:0,8 auf 1:1,2 angehoben. Der höhere Alkaligehalt führte zu einer heftigeren Reaktion. Die erhaltene Hydrolyselösung zeigte folgende Werte:

| | |
|---|---|
| Feststoffgehalt | 22,9% |
| Gehalt an Reststickstoff | 0, 5% |
| Gehalt an COOH-Gruppen | 6,9% |

*Beispiel 15*

In einem 1 l-Dreihalskolben wurden in 392 ml Wasser 30,2 g NaOH gelöst, zum Sieden erhitzt und portionsweise 157,6 g eines feuchten Acrylnitril-Homopolymerisates aus dem Beispiel 7 zugegeben. Das feuchte Polymerisat war mit einem Feststoffgehalt von 32% als Zentrifugenrückstand angefallen und wies einen K-Wert von 15 auf. Das Material wurde wiederum 6 Stunden lang kochend unter Rückfluss verseift, das Nitrilgruppen : NaOH-Molverhältnis betrug 1:0,8.

*Beispiel 16*

Das Verseifungsprodukt nach Beispiel 14 wurde für den Einsatz als Ablagerungsverhinderer (scale inhibitor) nach der Labortestmethode NACE-Standard TM/03/74 geprüft. Hierbei wird der Anteil des in der Lösung vorhandenen $CaSO_4$ bzw. $CaCO_3$ bei der Zugabe von Inhibitoren gegenüber einer Blindprobe bestimmt.

*$CaSO_4$-Test:* Benötigt werden zwei Lösungen, die Lösung A) mit 7,5 g/l NaCl und 11,1 g/l $CaCl_2 \cdot 2H_2O$ sowie eine Lösung B) mit 7,5 g/l NaCl und 10,66 g/l $Na_2SO_4$. Jeweils 50 ml der Lösung A) und B) werden in einer Flasche vermischt und nach Zugabe einer vorgegebenen Menge an Verseifungsprodukt fest verschlossen, durchgeschüttelt und bei 71 °C 72 Stunden lang temperiert. Anschliessend wurde sehr vorsichtig 1 ml der über dem $CaSO_4$-Niederschlag stehenden klaren, kristallfreien Lösung entnommen, in einem Kolben verdünnt und der Gehalt an vorhandenen Calciumionen in der entnommenen Probe komplexometrisch bestimmt.

*$CaCO_3$-Test:* Auch hierfür werden zwei Lösungen benötigt. Die Lösung A) enthält 12,15 g/l $CaCl_2 \cdot 2H_2O$ und 3,68 g/l $MgCl_2 \cdot 6\ H_2O$ und 33 g/l NaCl während die Lösung B) 7,36 g $NaHCO_3$ und 0,0294 g/l $Na_2SO_4$ und 33 g/l NaCl enthält. Beide Lösungen werden zunächst mit $CO_2$ gesättigt und dann jeweils 50 ml der beiden Lösungen miteinander vermischt, mit gemessenen Mengen an Verseifungsprodukt versetzt und weiter wie bei dem $CaSO_4$-Test behandelt.

Die Ergebnisse des $CaSO_4$-Tests und des $CaCO_3$-Tests bei Zusatz von Hydrolyselösungen, die gemäss Beispiel 14 erhalten wurden, wobei noch eine weitergehende Variation des Nitrilgruppen-NaOH-Molverhältnisses vorgenommen wurde, sind in den Tabellen 1 und 2 festgehalten. In den Tabellen ist neben dem genannten Molverhältnis der Gehalt an Calciumionen in mg/l in der überstehenden Lösung nach Zugabe einer entsprechenden Menge an Hydrolysatlösung wiedergegeben. Die Hydrolysatlösungen können etwa als 15%ig angesehen werden. Die Schwankungen der Messwerte sind aller Wahrscheinlichkeit nach auf mitgerissene kleinste Calciumsulfat- oder Calciumcarbonatkriställchen bei der Probenahme zurückzuführen.

*Beispiel 17*

Das Beispiel 16 wurde wiederholt, jedoch jetzt unter Zusatz einer Hydrolyselösung gemäss Beispiel 15. Auch hier wurden noch verschiedene Läufe untersucht, die bei einem unterschiedlichen Molverhältnis von Nitrogruppen zu NaOH bei der Verseifung anfielen. Die Ergebnisse sind in den Tabellen 3 und 4 festgehalten worden. Wie bei dem vorhergehenden Beispiel wurde wiederum eine Wirksamkeit bei dem $CaSO_4$-Test bis herunter zu 0,5 ppm einer ca. 15%igen Hydrolysatlösung gefunden. Ein Einfluss des Molverhältnis von Nitrilgruppen zu NaOH bei der Verseifung scheint beim $CaSO_4$-Test keine Rolle zu spielen. Im Gegensatz dazu ist aus der Tabelle 4, dem $CaCO_3$-Test, zu entnehmen, dass ein höheres Nitrilgruppen/NaOH-Verhältnis zu einem wirksameren Produkt führt.

TABELLE 1    $CaSO_4$-Test:

| Lauf | Molverhält. Nitrilgr./NaOH | Gehalt an $Ca^{++}$-Ionen in mg/l nach Zugabe einer ca. 15%igen Hydrolysatlösung in ppm | | | | | | | |
|---|---|---|---|---|---|---|---|---|---|
| | | 0 (Blindprobe) | 20 | 10 | 5 | 3 | 1 | 0,5 | 0,1 |
| a | 1 : 0,8 | 3620 | 5400 | 5090 | 5360 | 5260 | 5770 | 5200 | 3590 |
| b | 1 : 1 | 3600 | 4980 | 5140 | 5390 | 5170 | 5270 | 5090 | 3940 |
| c | 1 : 1,2 | 3620 | 5100 | 5390 | 5280 | 5230 | 5200 | 4680 | 3540 |
| d | 1 : 1,5 | 3670 | 5100 | 5170 | 5050 | 5180 | 5250 | 5220 | 3580 |

Maximal konnten 5535 mg $Ca^{++}$/l enthalten sein.

TABELLE 2    $CaCO_3$-Test:

| Lauf | Molverhält. Nitrilgr./NaOH | Gehalt an $Ca^{++}$-Ionen in mg/l nach Zugabe einer ca. 15%igen Hydrolysatlösung in ppm | | | | | |
|---|---|---|---|---|---|---|---|
| | | 0 (Blindprobe) | 20 | 10 | 5 | 3 | 1 |
| a | 1 : 0,8 | 3100 | 3730 | 3740 | 3690 | 3640 | 3450 |
| b | 1 : 1 | 3160 | 3900 | 4040 | 4100 | 4070 | 3500 |
| c | 1 : 1,2 | 3200 | 4100 | 4190 | 4230 | 4190 | 3750 |
| d | 1 : 1,5 | 3160 | 4340 | 4120 | 4300 | 3940 | 3360 |

Maximal konnten 5000 mg $Ca^{++}$/l enthalten sein.

TABELLE 3    $CaSO_4$-Test:

| Lauf | Molverhält. Nitrilgr./NaOH | Gehalt an $Ca^{++}$-Ionen in mg/l nach Zugabe einer ca. 15%igen Hydrolysatlösung in ppm | | | | | | | |
|---|---|---|---|---|---|---|---|---|---|
| | | 0 (Blindprobe) | 20 | 10 | 5 | 3 | 1 | 0,5 | 0,1 |
| e | 1 : 0,8 | 3520 | 5100 | 5090 | 5100 | 5100 | 5030 | 5030 | 3630 |
| f | 1 : 1,5 | 3520 | 5170 | 5220 | 5360 | 5280 | 5150 | 5130 | 4980 |
| g | 1 : 2,0 | 3590 | 5100 | 4980 | 5250 | 5080 | 5110 | 5060 | 3760 |

Maximal konnten 5140 mg $Ca^{++}$/l vorhanden sein.

TABELLE 4    $CaCO_3$-Test:

| Lauf | Molverhält. Nitrilgr./NaOH | Gehalt an $Ca^{++}$-Ionen in mg/l nach Zugabe einer ca. 15%igen Hydrolysatlösung in ppm | | | | | |
|---|---|---|---|---|---|---|---|
| | | 0 (Blindprobe) | 20 | 10 | 5 | 3 | 1 |
| e | 1 : 0,8 | 3080 | 3340 | 3560 | 3290 | 3320 | 3200 |
| f | 1 : 1,5 | 3080 | 3950 | 4230 | 4020 | 3640 | 3480 |
| g | 1 : 2,0 | 3200 | 4100 | 4230 | 3900 | 4040 | 3720 |

Maximal konnten 5000 mg $Ca^{++}$/l gefunden werden.

**Patentansprüche für die Vertragsstaaten:**
BE, CH, DE, FR, GB, IT, LI, NL

1. Homo- oder Copolymerisat des Acrylnitrils aus wenigstens 60 Gew.-% Acrylnitrileinheiten und bis zu 40 Gew.-% aus mit Acrylnitril copolymerisierbaren Einheiten, dadurch gekennzeichnet, dass diese Polymerisate einen K-Wert nach Fikentscher von 34 bis 15 und einen Gesamtgehalt an Sulfonat- und Sulfat-Endgruppen, die nicht aus Sulfonat- oder Sulfat-gruppenhaltigen Comonomeren herrühren, von 250 bis 1000 Milliäquivalent pro kg Polymerisat bei einem Gehalt an Sulfonatendgruppen von 180 bis 900 Milliäquivalent pro kg Polymerisat aufweisen.

2. Verfahren zur Herstellung von niedermolekularen Homo- oder Copolymerisaten des Acrylnitrils aus mindestens 60 Gew.-% Acrylnitrileinheiten und bis zu 40 Gew.-% aus mit Acrylnitril copolymerisierbaren Einheiten durch kontinuierliche oder halbkontinuierliche Fällungspolymerisation mittels eines Redoxsystems in wässrigem Medium bei pH-Werten von 1,5 bis 4,0, dadurch gekennzeichnet, dass die Polymerisation bei einer Monomerkonzentration von 12 bis 30 Gew.-%, bezogen auf die in der gleichen Zeiteinheit zudosierten Menge an Wasser und Monomeren durchgeführt wird, das Redoxsystem aus einem Persulfat-Katalysator in Konzentrationen von 0,5 bis 2,5 Gew.-%, gerechnet als $S_2O_8^{2-}$, einem Sulfit-Aktivator in Konzentrationen von 5 bis 25 Gew.-%, gerechnet als $S_2O_5^{2-}$, und Eisenionen als Beschleuniger in Konzentrationen von $6 \times 10^{-4}$ bis $2 \times 10^{-2}$ Gew.-%, bezogen jeweils auf die in der gleichen Zeiteinheit zudosierten Menge an Wasser, besteht und das Gewichtsverhältnis Persulfat-Katalysator zu Pyrosulfit-Aktivator von 1:2 bis 1:30 wird, die mittlere Verweilsdauer der Monomeren in der Reaktionsmischung 1 bis 4 Stunden beträgt und die Werte der Konzentrationen von Monomeren, Katalysator, Aktivator, Beschleuniger sowie das Katalysator/Aktivator-Verhältnis und die Verweilzeit so aufeinander abgestimmt werden, dass die erhaltenen Polymerisate einen K-Wert nach Fikentscher von 34 bis 15 aufweisen.

3. Verfahren nach Anspruch 2, dadurch gekennzeichnet, dass die Polymerisation bei Temperaturen von 30 bis 65°C durchgeführt wird.

4. Verfahren nach Anspruch 2, dadurch gekennzeichnet, dass die mittlere Verweilzeit der Monomeren in der Reaktionsmischung während der Polymerisation 1,5 bis 2,5 Stunden beträgt.

5. Verfahren nach Anspruch 2, dadurch gekennzeichnet, dass als Katalysator Kaliumpersulfat, als Aktivator Natriumpyrosulfit und als Beschleuniger Mohrsches Salz verwendet wird.

6. Verwendung der Polymerisate gemäss Anspruch 1 nach einer Hydrolyse als Emulgatoren, Dispergatoren bzw. Hilfsmittel insbesondere als Ablagerungsverhinderer (scale inhibitor) bei Tiefbohrungen und bei der Erdölförderung.

**Patentansprüche für den Vertragsstaat: AT**

1. Verfahren zur Herstellung von niedermolekularen Homo- oder Copolymerisaten des Acrylnitrils aus mindestens 60 Gew.-% Acrylnitrileinheiten und bis zu 40 Gew.-% aus mit Acrylnitril copolymerisierbaren Einheiten durch kontinuierliche oder halbkontinuierliche Fällungspolymerisation mittels eines Redoxsystems in wässrigem Medium bei pH-Werten von 1,5 bis 4,0, dadurch gekennzeichnet, dass die Polymerisation bei einer Monomerkonzentration von 12 bis 30 Gew.-%, bezogen auf die in der gleichen Zeiteinheit zudosierten Menge an Wasser und Monomeren durchgeführt wird, das Redoxsystem aus einem Persulfat-Katalysator in Konzentrationen von 0,5 bis 2,5 Gew.-%, gerechnet als $S_2O_8^{2-}$, einem Sulfit-Aktivator in Konzentrationen von 5 bis 25 Gew.-%, gerechnet als $S_2O_5^{2-}$, und Eisenionen als Beschleuniger in Konzentrationen von $6 \times 10^{-4}$ bis $2 \times 10^{-2}$ Gew.-%, bezogen jeweils auf die in der gleichen Zeiteinheit zudosierten Menge an Wasser, besteht und das Gewichtsverhältnis Persulfat-Katalysator zu Pyrosulfit-Aktivator von 1:2 bis 1:30 eingestellt wird, die mittlere Verweilsdauer der Monomeren in der Reaktionsmischung 1 bis 4 Stunden beträgt und die Werte der Konzentrationen von Monomeren, Katalysator, Aktivator, Beschleuniger sowie das Katalysator/Aktivator-Verhältnis und die Verweilzeit so aufeinander abgestimmt werden, dass die erhaltenen Polymerisate einen K-Wert nach Fikentscher von 34 bis 15 aufweisen.

2. Verfahren nach Anspruch 1, dadurch gekennzeichnet, dass die Polymerisation bei Temperaturen von 30 bis 65°C durchgeführt wird.

3. Verfahren nach Anspruch 1, dadurch gekennzeichnet, dass die mittlere Verweilzeit der Monomeren in der Reaktionsmischung während der Polymerisation 1,5 bis 2,5 Stunden beträgt.

4. Verfahren nach Anspruch 1, dadurch gekennzeichnet, dass als Katalysator Kaliumpersulfat, als Aktivator Natriumpyrosulfit und als Beschleuniger Mohrsches Salz verwendet wird.

5. Verwendung der nach einem der vorgehenden Ansprüche erhaltenen Polymerisate nach einer Hydrolyse als Emulgatoren, Dispergatoren bzw. Hilfsmittel insbesondere als Ablagerungsverhinderer (scale inhibitor) bei Tiefbohrungen und bei Erdölförderung.

**Claims for the Contracting States:**
BE, CH, DE, FR, GB, IT, LI, NL

1. A homopolymer or copolymer of acrylonitrile which contains at least 60% by weight of acrylonitrile units and up to 40% by weight of units which can be copolymerized with acrylonitrile, characterized in that said polymer has a Fikentscher K value of 34 to 15 and a total content of sulfonate and sulfate end groups which do not originate from comonomers containing sulfonate or sulfate groups of 250 to 1,000 milliequivalents per kg of polymer, with a content of sulfonate end groups of 180 to 900 milliequivalents per kg of polymer.

2. A process for the preparation of a low molecular weight homopolymer or copolymer of acrylonitrile which contains at least 60% by weight of acrylonitrile units and up to 40% by weight of units which can be copolymerized with acrylonitrile by continuous or semi-continuous precipitation polymerization by means of a redox system in an aqueous medium at a pH value of 1.5 to 4.0, characterized in that the polymerization is carried out at a monomer concentration of 12 to 30% by weight, based on the amount of water and monomers metered in during the same unit of time, the redox system consists of a persulfate catalyst in a concentration of 0.5 to 2.5% by weight, calculated as $S_2O_8^{2-}$, a sulfite activator in a concentration of 5 to 25% by weight, calculated as $S_2O_5^{2-}$, and iron ions as an accelerator in a concentration of $6 \times 10^{-4}$ to $2 \times 10^{-2}$% by weight, in each case based on the amount of water metered in during the same unit of time, the weight ratio of persulfate catalyst to pyrosulfite activator is adjusted to 1:2 1:30, the average residence time of the monomers in the reaction mixture is 1 to 4 hours and the values for the concentrations of monomers, catalyst, activator and accelerator and the catalyst/activator ratio and the residence time is matched with one another such that the resulting polymer has a Fikentscher K value of 34 to 15.

3. The process as claimed in claims 2, characterized in that the polymerization is carried out at temperatures from 30 to 65°C.

4. The process as claimed in claim 2, characterized in that the average residence time of the monomers in the reaction mixture during the polymerization is 1.5 to 2.5 hours.

5. The process as claimed in claim 2, characterized in that potassium persulfate is used as the catalyst, sodium pyrosulfite is used as the activator and Mohr's salt is used as the accelerator.

6. The use of a polymer as claimed in claim 1, after hydrolysis, as an emulsifier, dispersing agent or auxiliary, in particular as a scale inhibitor for deep bores and for crude oil production.

**Claims for the Contracting State: AT**

1. A process for the preparation of a low molecular weight homopolymer or copolymer of acrylonitrile which contains at least 60% by weight of acrylonitrile units and up to 40% by weight of units which can be copolymerized with acrylonitrile by continous or semi-continuous precipitation polymerization by means of a redox system in an aqueous medium at a pH value of 1.5 to 4.0, characterized in that the polymerization is carried out at a monomer concentration of 12 to 30% by weight, based on the amount of water and monomers metered in during the same unit of time, the redox system consists of a persulfate catalyst in a concentration of 0.5 to 2.5% by weight, calculated as $S_2O_8^{2-}$, a sulfite activator in a concentration of 5 to 25% by weight, calculated as $S_2O_5^{2-}$, and iron ions as an accelerator in a concentration of $6 \times 10^{-4}$ to $2 \times 10^{-2}$ by weight, in each case based on the amount of water mered in during the same unit of time, the weight ratio of persulfate catalyst to pyrosulfite activator is adjusted to 1:2 to 1:30, the average residence time of the monomers in the reaction mixture is 1 to 4 hours and the values for the concentrations of monomers, catalyst, activator and accelerator and the catalyst/activator ratio and the residence time is matched with one another such that the resulting polymer has a Fikentscher K value of 34 to 15.

2. The process as claimed in claim 1, characterized in that the polymerization is carried out at temperatures from 30 to 65°C.

3. The process as claimed in claim 1, characterized in that the average residence time of the monomers in the reaction mixture during the polymerization is 1.5 to 2.5 hours.

4. The process as claimed in claim 1, characterized in that potassium persulfate is used as the catalyst, sodium pyrosulfite is used as the activator and Mohr's salt is used as the accelerator.

5. The use of a polymer produced according to one of the preceding claims, after hydrolysis, as an emulsifier, dispersing agent or auxiliary, in particular as a scale inhibitor for deep bores and for crude oil production.

**Revendications pour les Etats contractants:**
BE, CH, DE, FR, GB, IT, LI, NL

1. Homo- ou copolymère de l'acrylonitrile comportant au-moins 60% en poids de motifs acrylonitrile et jusqu'à 40% en poids de motifs copolymérisables avec l'acrylonitrile, caractérisé en ce que ce polymère présente une valeur K selon Fikentscher de 34 à 15 et une teneur totale en groupes terminaux sulfonate et sulfate, ne provenant pas de comonomères contenant des groupes sulfonate ou sulfate, comprise entre 250 et 1 000 milliéquivalents par kg de polymère, avec une teneur en groupes terminaux sulfonate de 180 à 900 milliéquivalents par kg de polymère.

2. Procédé de préparation d'homo- ou copolymères de bas poids moléculaire de l'acrylonitrile, comportant au-moins 60% en poids de motifs acrylonitrile et jusqu'à 40% en poids de motifs copolymérisables avec l'acrylonitrile, par une polymérisation avec précipitation, en continu ou en semi-continu, au moyen d'un système redox, en milieu aqueux, à un pH de 1,5 à 4,0, caractérisé en ce que la polymérisation est conduite à une concentration en monomères de 12 à 30% en poids, par rapport à la quantité d'eau et de monomères introduite de manière dosée dans la même unité de temps, en ce que le système redox consiste en un catalyseur du type persulfate en concentration de 0,5 à 2,5% en poids, calculée en $S_2O_8^{2-}$, en un activateur du type sulfite en concentration de 5 à 25% en poids calculée en $S_2O_5^{2-}$, et en ions fer comme accélérateurs en concentration de $6 \times 10^{-4}$ à $2 \times 10^{-2}$% en poids, par rapport à chaque fois à la quantité d'eau introduite dans la même unité de temps, et en ce que on règle le rapport en poids du catalyseur du type persulfate à l'activateur du type pyrosulfite entre 1:2 et 1:30, en ce que le temps de séjour moyen des monomères dans le mélange réactionnel s'élève à 1 à 4 heures et en ce que les valeurs des concentrations des monomères, du catalyseur, de l'activateur, des accélérateurs ainsi que le rapport du catalyseur à l'activateur et les temps de séjour sont déterminés les uns par rapport aux autres de telle manière que le polymère obtenu présente une valeur K selon Fikentscher de 34 à 15.

3. Procédé selon la revendication 2, caractérisé en ce que l'on effectue la polymérisation à une température comprise entre 30 et 65°C.

4. Procédé selon la revendication 2, caractérisé en ce que le temps de séjour moyen des monomères dans le mélange réactionnel durant la polymérisation est compris entre 1,5 et 2,5 heures.

5. Procédé selon la revendication 2, caractérisé en ce que l'on utilise comme catalyseur le persulfate de potassium, comme activateur le pyrosulfite de sodium et comme accélérateur le sel de Mohr.

6. Utilisation des polymères selon la revendication 1, après une hydrolyse, comme émulsifiants, dispersants ou adjuvants et en particulier comme anti-incrustants dans les forages profonds et dans le domaine de la production de pétrole.

**Revendications pour l'Etat contractant: AT**

1. Procédé de préparation d'homo-ou de copolymères de l'acrylonitrile de bas poids moléculaire, comportant au-moins 60% en poids de motifs acrylonitrile et jusqu'à 40% en poids de motifs copolymérisables avec l'acrylonitrile, par une polymérisation, avec précipitation, en continu ou en semi-continu au moyen d'un système redox, en milieu aqueux, à un pH de 1,5 à 4,0, caractérisé en ce que l'on effectue la polymérisation à une concentration en monomères de 12 à 30% en poids par rapport à la quantité d'eau et de monomères introduite de manière dosée dans la même unité de temps, en ce que le système redox consiste en un catalyseur du type persulfate en concentration de 0,5 à 2,5% en poids, calculée en $S_2O_8^{2-}$, en un activateur du type sulfite en concentration de 5 à 25% en poids, calculée en $S_2O_5^{2-}$, et en ions fer comme accélérateurs en concentration de $6 \times 10^{-4}$ à $2 \times 10^{-2}$% en poids, par rapport è chaque fois à la quantité d'eau introduite de manière dosée dans la même unité de temps, en ce que le rapport en poids du catalyseur du type persulfate à l'activateur du type pyrosulfite est réglé à 1:2 à 1:30, en ce que le temps de séjour moyen des monomères dans le mélange réactionnel s'élève à 1 à 4 heures, et en ce que les valeurs des concentrations en monomères, catalyseur, activateur, accélérateurs, ainsi que le rapport du catalyseur à l'activateur et le temps de séjour sont déterminés les uns par rapport aux autres de telle manière que le polymère obtenu présente une valeur K selon Fikentscher de 34 à 15.

2. Procédé selon la revendication 1, caractérisé en ce que la polymérisation est effectuée à des températures de 30 à 65°C.

3. Procédé selon la revendication 1, caractérisé en ce que le temps de séjour moyen des monomères dans le mélange réactionnel, durant la polymérisation, est compris entre 1,5 et 2,5 heures.

4. Procédé selon la revendication 1, caractérisé en ce que l'on utilise comme catalyseur le persulfate de potassium, comme activateur le pyrosulfite de sodium et comme accélérateur le sel de Mohr.

5. Utilisation des polymères selon l'une quelconque des revendications précédentes, après une hydrolyse, comme émulsifiants, dispersants ou adjuvants, en particulier comme anti-incrustants dans les forages profonds et dans le secteur de la production de pétrole.